# EUROPÄISCHE PATENTSCHRIFT

(11) **EP 1 132 651 B1**
(45) Veröffentlichungstag und Bekanntmachung des Hinweises auf die Patenterteilung: **03.11.2004**
(21) Anmeldenummer: 01105817.9
(22) Anmeldetag: 08.03.2001
(51) Int. Cl.: F16H 25/22

(54) **Wälzkörpergewindetrieb**
Rolling element screw drive
Entraînement fileté à éléments de roulement

(30) Priorität: 09.03.2000 DE 10011383
(43) Veröffentlichungstag der Anmeldung: 12.09.2001
(73) Patentinhaber: Rexroth Star GmbH, 97424 Schweinfurt (DE)
(72) Erfinder: Greubel, Roland, 97729 Ramsthal (DE)
(74) Vertreter: Herzog, Markus, Dipl.-Phys. Dr.

(56) Entgegenhaltungen:
- US-A- 4 258 584
- US-A- 4 604 911
- US-A- 5 005 436
- US-A- 5 094 119
- US-A- 5 664 459

## Beschreibung

Die Erfindung betrifft einen Wälzkörpergewindetrieb gemäß dem Oberbegriff des Anspruchs 1.

Bei dem aus der gattungsbildenden US-A-5,094,119 bekannten Wälzkörpergewindetrieb sind die Umlenkelemente jeweils aus zwei Umlenkelement-Teilen zusammengesetzt, welche in Bewegungsrichtung der Wälzkörper aufeinander folgend angeordnet sind. In jedem dieser Umlenkelement-Teile ist ein Längenabschnitt des Umlenkkanals ausgebildet, der von einer über seinen gesamten Umfang geschlossenen Wandungsfläche dieses Umlenkelement-Teils begrenzt ist. Es ist leicht einzusehen, dass die Fertigung derjenigen Umlenkelement-Teile dieses Wälzkörpergewindetriebs, die einen geschlossenen Umlenkkanal aufweisen, relativ aufwendig ist, da die Spritzgussform zur Ausbildung des Umlenkkanals wenigstens zwei von unterschiedlichen Seiten her in den Formhohlraum eingesetzte Kernelemente aufweisen muss. Diese Kernelemente müssen nach dem Aushärten des Umlenkelements aus diesem entfernt werden und zur Fertigung des nächsten Umlenkelement-Teils wieder in die Form eingebracht und dort positioniert werden. Darüber hinaus erwiesen sich die Umlenkelemente des bekannten Wälzkörpergewindetriebs, insbesondere bei Schwerlast-Ausführungsformen mit großen Wälzkörperdurchmessern, gelegentlich als nicht ausreichend robust. So kam es in der Praxis, insbesondere bei den Ausführungsformen mit offenem Umlenkkanal, aufgrund stark unterschiedlicher Wanddicken zu unerwünschten Verformungen der Umlenkelemente.

Ein entsprechender Wälzkörpergewindetrieb mit einem einstückigen Umlenkelement ist beispielsweise aus der DE-C-29 14 756 bekannt.

Umlenkelemente, wie sie vorstehend beschrieben wurden, sind ferner aus der DE-C-24 37 497 bekannt. Ferner sei auf einen Prospekt von Fa. A. Mannesmann, Remscheid, mit dem Titel "AM-Werknorm 26" verwiesen, aus dem die Fertigung eines Umlenkstücks mit einem in Umfangsrichtung nicht vollständig geschlossenen Umlenkkanal mittels eines Schaftfräsers hervorgeht, der an der Spitze kugelförmig angebrachte Schneiden aufweist.

Aus der US-A-5,005,436 ist ein aus zwei Halbschalen zusammengesetztes Element bekannt, welches die Wälzkörper aus dem Gewindekanal an dessen einem Ende aufnimmt, zu dessen anderem Ende zurückführt und dort wieder in den Gewindekanal überführt, und somit eine vollkommen andere Funktion erfüllt als das erfindungsgemäße Umlenkelement.

Der Vollständigkeit halber sei zum Stand der Technik noch auf die US-A-4,258,584, die US-A-4,604,911 und die US-A-5,664,459 verwiesen.

Demgegenüber ist es Aufgabe der vorliegenden Erfindung, einen Wälzkörpergewindetrieb der eingangs genannten Art mit einfacher zu fertigenden Umlenkelementen anzugeben.

Diese Aufgabe wird erfindungsgemäß durch einen Wälzkörpergewindetrieb mit den Merkmalen des Anspruchs 1 gelöst. Insbesondere bei der bevorzugten Herstellung der Umlenkelement-Teile als Kunststoff-Teile im Spritzgussverfahren brauchen zur Ausbildung des Umlenkkanals daher keine Formkerne in die Form eingesetzt zu werden. Somit kann ein fertig ausgehärtetes Umlenkelement-Teil durch einfaches Öffnen der Formhälften entformt und die Form durch einfaches Wiederschließen auf die Herstellung des nächsten Umlenkelement-Teils vorbereitet werden. Eine spanabhebende Nachbearbeitung der Umlenkelement-Teile ist nicht erforderlich.

Das Umlenkelement kann beispielsweise ein Umlenkelement-Hauptteil und wenigstens ein Umlenkelement-Nebenteil aufweisen, wobei das Umlenkelement-Hauptteil neben der Umgrenzung des Umlenkkanals auch noch andere Funktionen übernimmt, beispielsweise der Befestigung des Umlenkelements an der Gewindemutter dient. Die Umlenkelement-Teile können beispielsweise miteinander verklemmt oder mittels wenigstens eines an einem der Umlenkelement-Teile angeordneten Stiftes, der in eine entsprechende Ausnehmung des jeweils anderen Umlenkelement-Teils eingreift, miteinander verbunden sein. Sind mehrere derartige Stift-Ausnehmungs-Paare vorgesehen, so brauchen nicht alle Stifte an ein und demselben Umlenkelement-Teil angeordnet zu sein. Wenigstens ein Stift-Ausnehmungs-Paar kann derart ausgebildet sein, dass der Stift nur unter Druck in die Ausnehmung eingeführt werden kann, so dass sich ein Presssitz ergibt. Auch diese Art der Verbindung kann im Sinne der vorliegenden Anmeldung als "Verklemmen" der Umlenkelement-Teile angesehen werden. Grundsätzlich ist es jedoch auch denkbar, die Umlenkelement-Teile miteinander zu verkleben.

Eine besonders sichere Art der Montage des Umlenkelements an der Gewindemutter besteht in der Verschraubung dieser beiden Teile. Dabei kann ein zum Durchführen des Schraubbolzens vorgesehenes Durchgangsloch vorzugsweise lediglich das Umlenkelement-Hauptteil durchsetzen. Das wenigstens eine Umlenkelement-Nebenteil kann in diesem Fall infolge der Befestigung von dem Umlenkelement-Hauptteil an der Gewindemutter gehalten sein.

Eine besondere Weiterbildung der Umlenkelemente des erfindungsgemäßen Wälzkörpergewindetriebs ist darin zu sehen, dass der vorletzte Gewindeumlauf der den Gewindekanal auf Seiten der Gewindemutter begrenzenden Gewindefläche zumindest teilweise von der Außenfläche des Umlenkelement ausgebildet ist. Auf diese Weise kann das Umlenkelement in der Gewindemutter einen relativ großen Bauraum einnehmen, ohne deren Funktion zu beeinträchtigen. Dies erlaubt es, das Umlenkelement auch bei Einsatz von Wälzkörpern großen Durchmessers robust auszubilden.

Wenn der Verlauf der das Umlenkelement "anschneidenden" Laufbahnflanke des vorletzten Gewindeumlaufs derart gewählt wird, dass diese Laufbahnflanke bei der Vorüberbewegung der Wälzkörper gezielt entlastet wird, so kann ein von dieser Wälzkörperbewegung herrührender Verschleiß an dem Umlenkelement minimiert, wenn nicht gar vollständig verhindert werden. Eine derartige gezielte Beeinflussung des Verlaufs von Laufbahnflanken wird in der Fachsprache auch als "Shiften" bezeichnet.

In Weiterbildung der Erfindung kann das Umlenkelement ferner eine Ausnehmung aufweisen, in welche ein Halteelement eingesetzt ist, das aus einem härteren oder weicheren Material gebildet ist als das Umlenkelement, wobei die sich in Richtung der Tiefe der Ausnehmung erstreckende Abmessung des Halteelements derart bemessen ist, dass das in der Ausnehmung aufgenommene Halteelement weiter aus der Ausnehmung hervorsteht, als es dem zwischen dem Umlenkelement und der diesem zugeordneten Aufnahmevertiefung der Gewindemutter vorgesehenen Spiel entspricht. Beispielsweise kann das Halteelement aus der Ausnehmung zwischen etwa 0,05 mm und etwa 0,4 mm, vorzugsweise etwa 0,2 mm, hervorstehen. In einer besonders einfachen Ausführungsform kann das Halteelement eine Kugel sein. Diese Kugel kann dabei aus einem Material gefertigt sein, das sowohl weicher als auch härter als das Material des Umlenkelements sein kann. So kann die Kugel beispielsweise aus NBR (Nitrile-Butadiene Rubber) oder auch aus gehärtetem Stahl gefertigt sein. Der Einsatz eines weicheren Material, beispielsweise NBR, hat dabei den Vorteil, dass beim Eindrücken des Umlenkelements in seine Aufnahmevertiefung nicht das Umlenkelement verformt wird, was sich auf den Umlenkkanal nachteilig auswirken könnte, sondern die Haltekugel.

Wenn die Ausnehmung in einer Teilfläche der Außenfläche des Umlenkelements vorgesehen ist, welche zu jener Teilfläche der Außenfläche des Umlenkelements im Wesentlichen entgegengesetzt angeordnet ist, in welche der zum Gewindekanal führende Endabschnitt des Umlenkkanals mündet, so kann das Umlenkelement infolge der Vorspannung durch das Halteelement derart gegen die Gewindemutter angedrückt werden, dass sich ein im Wesentlichen bündiger Übergang vom Gewindekanal zum Umlenkkanal ergibt.

Um die Überführung der Wälzkörper aus dem Gewindekanal in den Umlenkkanal und umgekehrt erleichtern zu können, kann das Umlenkelement ferner einen Wälzkörperabhebeansatz aufweisen, der zum Eingriff in einen Gewindeumlauf der Gewindespindel bestimmt ist. Dabei kann die Außenkontur des Abhebeansatzes im Wesentlichen der Kontur der Gewindefläche der Gewindespindel entsprechend ausgebildet sein, und zwar vorzugsweise derart, dass sie im betriebsfertig montierten Zustand des Wälzkörpergewindetriebs im Wesentlichen äquidistant zur Kontur der Bodenfläche des Gewindeumlaufs der Gewindespindel angeordnet ist.

In Weiterbildung der Erfindung wird ferner vorgeschlagen, dass der Rückführkanal vom Innenraum eines einstückig oder mehrstückig ausgebildeten Rückführrohres mit vorzugsweise durch brechungsfreier Rohrwandung gebildet ist, das in eine Rückführausnehmung der Gewindemutter eingesetzt ist, die Begrenzungswandungen dieser Rückführausnehmung aber vorzugsweise nicht berührt. Der Einsatz eines derartigen Rückführrohres hat den Vorteil, dass sich die Fertigung der Gewindemutter vereinfacht, da sie lediglich eine mit relativ großen Toleranzen bemessene Rückführbohrung aufzuweisen braucht. Einen weiteren Vorteil des Einsatzes eines derartigen Rückführrohres stellt die damit einhergehende Minderung der Geräuschentwicklung dar. In Verbindung mit einer Vorrichtung, welche das Umlenkelement mit dem zum Gewindekanal führenden Endabschnitt des Umlenkkanals in Richtung auf diesen Gewindekanal hin vorspannt, hat das Vorsehen eines Rückführrohres darüber hinaus auch noch den Vorteil, dass etwaige Verlagerungen des Umlenkelements infolge dieser Vorspannung sich im Bereich des anderen Endabschnitts des Umlenkkanals nicht nachteilig auf den Übergang zwischen dem Rückführkanal und dem Umlenkkanal auswirken können.

Aus der EP-B-0 472 167 und der US-A-5,800,064 sind Linearlager bekannt, bei denen eine Rückführrohranordnung bzw. ein geschlitztes Rückführrohr zum Einsatz kommt. Bei Wälzkörpergewindetrieben ist der Einsatz derartiger Rückführrohre bislang nicht bekannt.

Das Rückführrohr kann mit den Umlenkelementen beispielsweise dadurch verbunden sein, dass wenigstens eines der Längsenden des Rückführrohrs in eine am Umlenkelement ausgebildete Ringausnehmung eingreift, wobei das Rückführrohr vorzugsweise mit dem Umlenkelement verklemmt sein kann.

Nachzutragen ist noch, dass die Wälzkörper bevorzugt Kugeln sind. Grundsätzlich sollen jedoch auch andere Arten von Wälzkörpern, beispielsweise Rollen, nicht ausgeschlossen sein.

Die Erfindung wird im Folgenden anhand der beigefügten Zeichnungen an Ausführungsbeispielen näher erläutert werden. Es stellt dar:
- Fig. 1: eine perspektivische Gesamtansicht eines erfindungsgemäßen Umlenkelements;
- Fig. 2: eine perspektivische Ansicht des Umlenkelements gemäß Fig. 1, jedoch in Explosionsdarstellung;
- Fig. 3: eine perspektivische Rückansicht des erfindungsgemäßen Umlenkelements aus Richtung des Pfeils III in Fig. 1; und
- Fig. 4: eine geschnittene Teilansicht der Gewindemutter eines erfindungsgemäßen Wälzkörperschraubtriebs, bei welcher das Umlenkelement gemäß Fig. 1 - 3 zum Einsatz kommt.

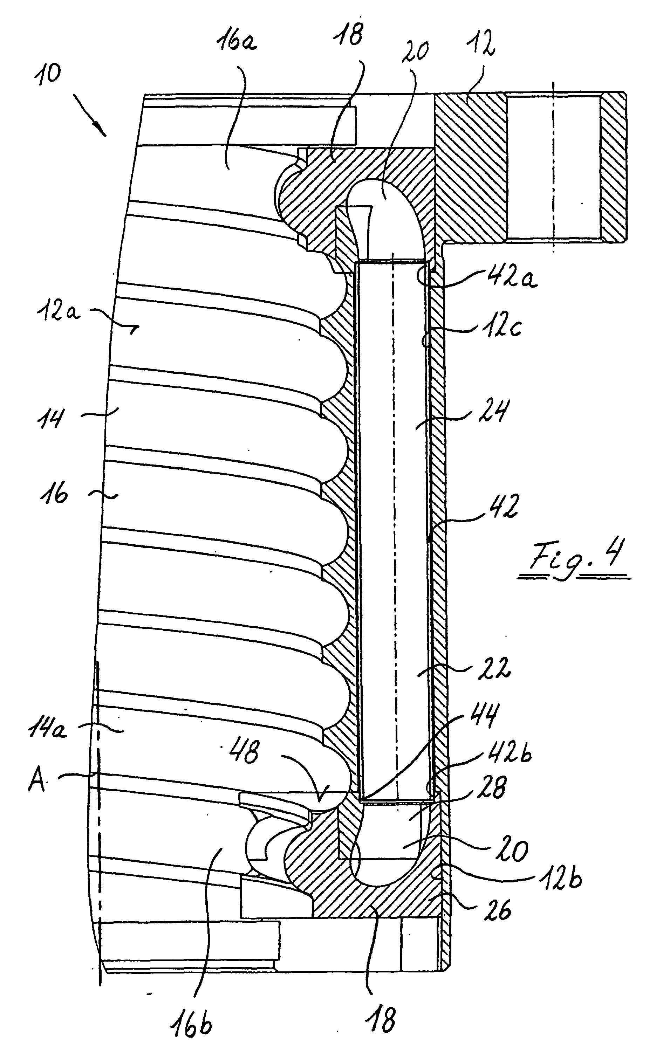

In Fig. 4 ist ein erfindungsgemäßer Wälzkörperschraubtrieb allgemein mit 10 bezeichnet. Er umfasst eine (nicht dargestellte) Gewindespindel und eine die Gewindespindel umschließende Gewindemutter 12. Die Gewindespindel ist an ihrer Außenumfangsfläche mit einer schraubenförmig in Richtung der Achse A verlaufenden Gewindefläche versehen. In analoger Weise weist auch die Gewindemutter 12 an ihrer Innenumfangsfläche 12a eine derartige sich schraubenförmig fortsetzende Gewindefläche 14 auf. Die Gewindefläche der Gewindespindel und die Gewindefläche 14 der Gewindemutter 12 bilden zusammen einen schraubenförmig verlaufenden Gewindekanal 16. An den Endbereichen 16a und 16b des Gewindekanals 16 ist an der Gewindemutter 12 jeweils ein Umlenkelement 18 vorgesehen. Bei einer Bewegung der Gewindemutter 12 relativ zur Gewindespindel dient eines der Umlenkelemente 18 dazu, die in dem Gewindekanal 16 laufenden Wälzkörper, beispielsweise Kugeln, aus dem Gewindekanal 16 zu entnehmen und durch einen Umlenkkanal 20 zu einem Rückführkanal 22 zu leiten. Durch den Rückführkanal gelangen die Wälzkörper zu dem jeweils anderen Längsende des Gewindekanals 16, wo sie von dem jeweils anderen Umlenkelement 18 wieder in den Gewindekanal 16 zurückgeführt werden. Der Gewindekanal 16, die beiden Umlenkkanäle 20 der Umlenkelemente 18 und der Rückführkanal 22 bilden gemeinsam einen endlosen Umlaufkanal 24, in welchem eine endlose Reihe von Wälzkörpern aufgenommen ist.

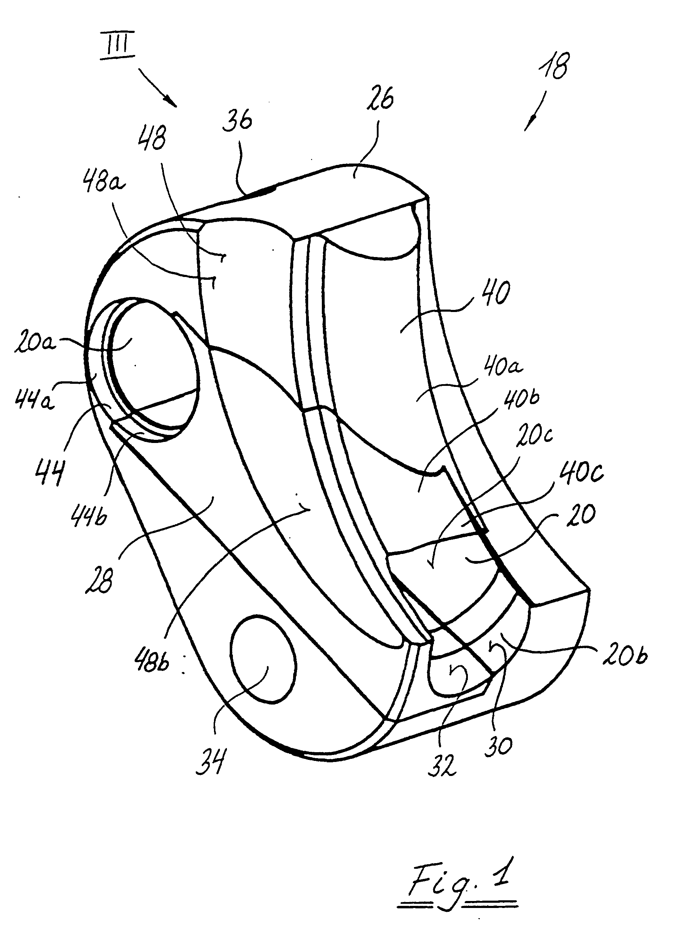

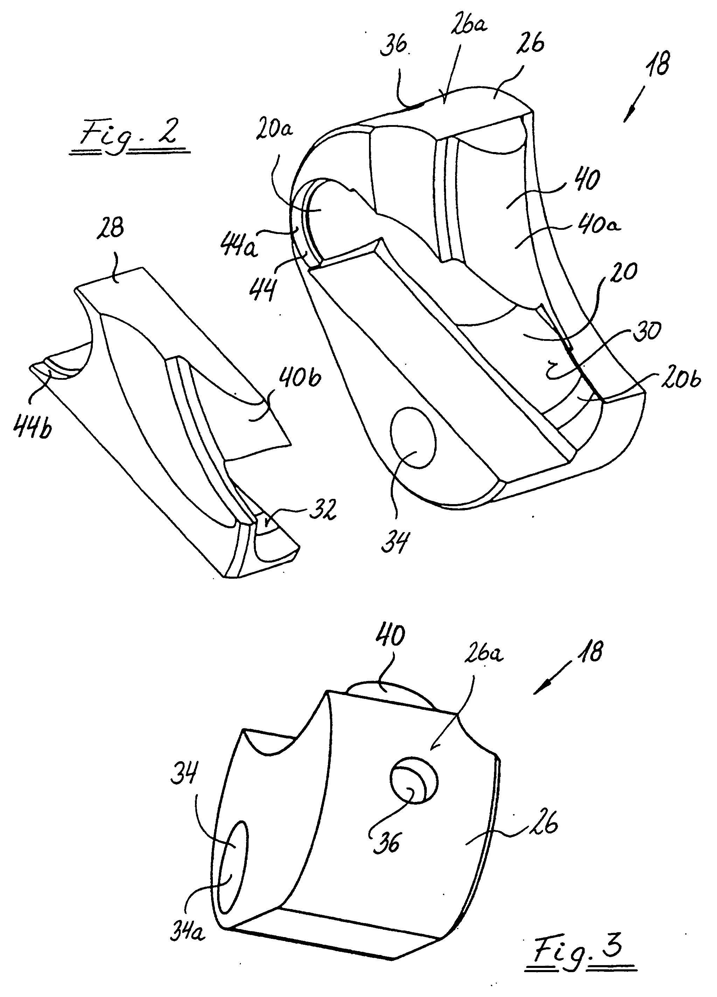

Wie in Fig. 4 angedeutet ist und wie deutlicher aus den Figuren 1 und 2 hervorgeht, sind die Umlenkelemente 18 des erfindungsgemäßen Wälzkörperschraubtriebs 10 zweiteilig ausgebildet. So umfasst das Umlenkelement 18 ein Hauptteil 26 und ein Nebenteil 28, die vorzugsweise beide als Spritzgussteile aus Kunststoff gefertigt sind. Die beiden Umlenkelement-Teile 26 und 28 begrenzen gemeinsam den Umlenkkanal 20 des Umlenkelements 18. Und zwar umfasst sowohl das Hauptteil 26 eine Umlenkkanal-Teilbegrenzungsfläche 30, die sich von einer dem Rückführkanal 22 nahen Mündungsöffnung 20a des Umlenkkanals 20 bis hin zu einer dem Gewindekanal 16 nahen Mündungsöffnung 20b des Umlenkkanals 20 erstreckt, als auch das Nebenteil 28 eine Umlenkkanal-Teilbegrenzungsfläche 32, die sich zwischen diesen beiden Mündungsöffnungen 20a und 20b des Umlenkkanals 20 erstreckt.

Die beiden Umlenkelement-Teile 26 und 28 können zwar grundsätzlich durch Verkleben aneinander befestigt sein. Um jedoch eine Beeinträchtigung des Umlenkkanals durch zwischen diesen beiden Umlenkelement-Teilen 26 und 28 in den Umlenkkanal 20 austretenden Klebstoff verhindern zu können, ist es jedoch von Vorteil, wenn die beiden Umlenkelement-Teile 26 und 28 miteinander verklemmt oder durch (nicht dargestellte) an einem der Umlenkelement-Teile angeordnete Stifte, welche in (ebenfalls nicht dargestellte) zugehörige Ausnehmungen am jeweils anderen Umlenkelement-Teil eingreifen, miteinander verbunden sind. Wie insbesondere aus Fig. 1 zu ersehen ist, schließen die beiden Umlenkelement-Teile 26 und 28 im Wesentlichen bündig aneinander an, so dass sich eine im Wesentlichen glatte und stufen- bzw. vorsprungsfreie Begrenzungsfläche 20c des Umlenkkanals 20 ergibt.

Die Verbindung der beiden Umlenkelement-Teile 26 und 28 kann beispielsweise im Zuge der Befestigung des Umlenkelements 18 bzw. der Umlenkelement-Teile 26 und 28 an der Gewindemutter 12 herbeigeführt werden. Zu dieser Befestigung umfasst das Umlenkelement-Hauptteil 26 ein Durchgangsloch 34, durch welches ein (nicht dargestellter) Schraubbolzen hindurchgeführt und mit der Gewindemutter 12 verschraubt werden kann.

Zur Aufnahme des Kopfes des Schraubbolzens ist das Durchgangsloch 34 gemäß Fig. 3 an einem seiner Enden mit einer erweiterten Ausnehmung 34a ausgebildet.

An einem der Mündungsöffnung 20b entgegengesetzten Abschnitt 26a der Außenfläche des Umlenkelement-Hauptteils 26 ist ein Sackloch 36 in dem Umlenkelement-Hauptteil 26 vorgesehen. In dieses Sackloch 36 wird bei der Montage des Umlenkelements 18 an der Gewindemutter 12 eine (nicht dargestellte) Halte- bzw. Vorspannkugel eingesetzt. Dabei sind die Tiefe des Sacklochs 36 und der Durchmesser der Halte- bzw. Vorspannkugel derart aufeinander abgestimmt bemessen, dass die Kugel aus dem Sackloch 36 etwas mehr hervorsteht, als es dem Spiel zwischen dem Umlenkelement 18 und der zu seiner Aufnahme bestimmten Ausnehmung 12b der Gewindemutter 12 (siehe Fig. 4) entspricht. Das Umlenkelement 18 muss daher mit etwas Kraft in seine Aufnahme 12b eingedrückt werden. Dabei wird bei Einsatz einer Halte- bzw. Vorspannkugel, die aus einem härteren Material gefertigt ist als das Umlenkelement 18, beispielsweise gehärtetem Stahl, das Sackloch 36 und insbesondere dessen Grund durch die Kugel elastisch oder plastisch verformt. Ist hingegen die Kugel aus einem weicheren Material gefertigt als das Umlenkelement 18, beispielsweise NBR (Nitrile-Butadiene Rubber), so wird die Kugel elastisch oder plastisch verformt. Infolge der Wechselwirkung der Halte- bzw. Vorspannkugel mit der Aufnahme 12b und dem das Sackloch 36 umgebenden Kunststoffmaterial des Umlenkelement-Hauptteils 26 wird das Umlenkelement 18 in der Aufnahme 12b derart vorgespannt, dass die dem Gewindekanal 16 nahe Mündungsöffnung 20b des Umlenkkanals 20 mit dem Gewindekanal 16 derart in Eingriff gedrückt wird, dass sich für die in dem Umlaufkanal 24 aufgenommenen Wälzkörper ein im Wesentlichen glatter Übergang zwischen Gewindekanal 16 und Umlenkkanal 20 ergibt.

Um eine problemlose Überführung der Wälzkörper aus dem Gewindekanal 16 in den Umlenkkanal 20 und umgekehrt ermöglichen bzw. sicherstellen zu können, weist das Umlenkelement 18 einen Wälzkörperabhebeansatz 40 auf. Die Außenkontur dieses Ansatzes 40 ist im Wesentlichen in Anpassung an die Gestalt der Gewindeumläufe der Gewindespindel gewählt, wobei allerdings darauf geachtet wurde, dass der Wälzkörperabhebeansatz 40 und insbesondere dessen Abhebenase 40c im betriebsfertig montierten Zustand des Wälzkörpergewindetriebs 10 im Wesentlichen äquidistant zu der Bodenfläche der Gewindeumläufe der Gewindespindel verläuft. Wie insbesondere in Fig. 1 zu sehen ist, setzt sich der Wälzkörperabhebeansatz 40 aus einem ersten am Umlenkelement-Hauptteil 26 ausgebildeten ersten Ansatzteil 40a und einem am Umlenkelement-Nebenteil 28 ausgebildeten zweiten Ansatzteil 40b zusammen.

Wie in Fig. 4 dargestellt ist, ist der Rückführkanal 22 nicht unmittelbar an der Gewindemutter 12 ausgebildet, sondern in einem von dieser gesondert ausgebildeten Rückführrohr 42, das mit Spiel in einem Axialdurchgang 12c der Gewindemutter 12 aufgenommen ist. Mit seinen Enden 42a und 42b greift das Rückführrohr 42 in eine Vertiefung 44 des Umlenkelements 18 ein, die die Mündungsöffnung 20a des Umlenkkanals 20 ringschulterartig umgibt. Wie wiederum Fig. 1 zu entnehmen ist, ist ein erster Umfangsabschnitt 44a dieser ringschulterartigen Ausnehmung 44 am Umlenkelement-Hauptteil 26 ausgebildet, während ein zweiter Umfangsabschnitt 44b am Umlenkelement-Nebenteil 28 ausgebildet ist.

Die Ausnehmung 44 und das Rückführrohr 42 sind derart aufeinander abgestimmt ausgebildet, dass das Rückführrohr 42 an dem Umlenkelement 18 im Wesentlichen spielfrei gehalten, vorzugsweise mit diesem verklemmt ist. Ferner weisen der Umlenkkanal 20 und das Rückführrohr 42 den gleichen Innendurchmesser bzw. die gleiche lichte Weite auf, so dass sich der Umlenkkanal 20 und der Rückführkanal 22 im Wesentlichen bündig und stufenfrei aneinander anschließen. Das Vorsehen eines derartigen Rückführrohrs 42, das die Begrenzungswandungen des Axialdurchganges 12c nicht berührt, hat den Vorteil, dass die bezüglich der Achse A radiale Position des Rückführkanals 22 nicht nur bei der Montage, sondern auch im Betrieb des Wälzkörpergewindetriebs 10 ohne Weiteres sich an die genaue Positionierung der Umlenkelemente 18 und insbesondere der Position der Mündungsöffnung 20a des Umlenkkanals 20 anpassen kann, so dass stets ein glatter und im Wesentlichen stufenfreier Übergang zwischen Umlenkkanal 20 und Rückführkanal 22 gewährleistet ist. Ein weiterer Vorteil des Einsatzes des Rückführrohres 42 ist in der damit einhergehenden verminderten Geräuschentwicklung zu sehen.

Eine weitere Besonderheit des erfindungsgemäßen Umlenkelements 18 ist darin zu sehen, dass ein Abschnitt 48 seiner Außenumfangsfläche als Teil einer Gewindeflanke des vorletzten Gewindeumlaufs 14a der Gewindefläche 14 ausgebildet ist. Die Fläche 48 des Umlenkelements 18 ist wiederum teilweise (bei 48a) am Umlenkelement-Hauptteil 26 und teilweise (bei 48b) am Umlenkelement-Nebenteil 28 ausgebildet. Infolge der vorstehend beschriebenen Ausbildung des Umlenkelements 18 mit der Gewindeflanken-Teilfläche 48 kann sich das Umlenkelement 18 in Richtung der Achse A bis in den Bereich des vorletzten Gewindeumlaufs 14a hinein erstrecken, d.h. es kann in Richtung der Achse A erheblich dicker bemessen sein, als dies bei herkömmlichen Umlenkelementen der Fall war. Dies ermöglicht es, das Umlenkelement 18 besonders robust und stabil auszubilden. Um zu verhindern, dass das Umlenkelement 18 aufgrund des Eingriffs mit den im Gewindekanal 16 umlaufenden Wälzkörpern erhöhtem Verschleiß ausgesetzt ist, wird zumindest der Teil der Gewindeflanke des Gewindeumlaufs 14a, in dem die Gewindeflanken-Teilbegrenzungsfläche 48 des Umlenkelements 18 angeordnet ist, durch "Shiften" der Gewindeumläufe gezielt entlastet, so dass die Wälzkörper auf der Fläche 48 ohne Last abrollen können.

## Patentansprüche

1. Wälzkörpergewindetrieb (10) mit einer Gewindespindel und einer die Gewindespindel umschließenden Gewindemutter (12),
wobei zwischen einer Außenumfangsfläche der Gewindespindel und einer Innenumfangsfläche (12a) der Gewindemutter (12) wenigstens ein schraubenförmig verlaufender Gewindekanal (16) vorgesehen ist,
wobei jeder Gewindekanal (16) zusammen mit einem die beiden Endbereiche (16a, 16b) des Gewindekanals (16) verbindenden Rückführkanal (22) einen endlosen Umlaufkanal (24) bildet, in dem eine endlose Reihe von Wälzköepern aufgenommen ist,
wobei jedem der beiden Endbereiche (1 6a, 16b) des wenigstens einen Gewindekanals (16) ein gesondertes, in einer Aufnahmevertiefung (12b) der Gewindemutter (12) aufgenommenes und an der Gewindemutter (12) gehaltenes Umlenkelement (18) mit einem Umlenkkanal (20) zugeordnet ist zum Überführen der Wälzkörper zwischen dem Gewindekanal (16) und dem Rückführkanal (22) bzw. zwischen dem Rückführkanal (22) und dem Gewindekanal (16), und
wobei wenigstens eines der Umlenkelemente (18) aus wenigstens zwei Umlenkelement-Teilen (26, 28) zusammengesetzt ist, welche den Umlenkkanal (20) gemeinsam begrenzen,
**dadurch gekennzeichnet, dass** sich eine zur Begrenzung des Umlenkkanals (20) beitragende Begrenzungsfläche (30, 32) jedes der Umlenkelement-Teile (26, 28) von einem Eintrittsende (20a) des Umlenkkanals (20) bis zu einem Austrittsende (20b) des Umlenkkanals (20) erstreckt.

2. Wälzkörpergewindetrieb nach Anspruch 1
**dadurch gekennzeichnet, dass** das Umlenkelement (18) ein Umlenkelement-Hauptteil (26) umfasst, welches beispielsweise der Befestigung des Umlenkelements (18) an der Gewindemutter (12) dient, sowie wenigstens ein Umlenkelement-Nebenteil (28).

3. Wälzkörpergewindetrieb nach Anspruch 1 oder 2,
**dadurch gekennzeichnet, dass** das Umlenkelement (18) mit der Gewindemutter (12) verschraubt ist.

4. Wälzkörpergewindetrieb nach den Ansprüchen 2 und 3,
**dadurch gekennzeichnet, dass** ein zum Durchführen des Schraubbolzens vorgesehenes Durchgangsloch (34) lediglich das Umlenkelement-Hauptteil (26) durchsetzt.

5. Wälzkörpergewindetrieb nach einem der Ansprüche 2 bis 4,
**dadurch gekennzeichnet, dass** wenigstens ein Umlenkelement-Nebenteil (28) infolge der Befestigung des Umlenkelement-Hauptteils (26) an der Gewindemutter (12) von diesem Umlenkelement-Hauptteil (26) an der Gewindemutter (12) gehalten ist.

6. Wälzkörpergewindetrieb nach einem der Ansprüche 1 bis 5,
**dadurch gekennzeichnet, dass** die Umlenkelement-Teile (26, 28) aneinander verklemmt sind, beispielsweise infolge der Befestigung des Umlenkelements (18) an der Gewindemutter (12).

7. Wälzkörpergewindetrieb nach einem der Ansprüche 1 bis 6,
**dadurch gekennzeichnet, dass** der vorletzte Gewindeumlauf (14a) der den Gewindekanal (16) auf Seiten der Gewindemutter (12) begrenzenden Gewindefläche (14) zumindest teilweise (48) von der Außenfläche des Umlenkelement (18) gebildet ist.

8. Wälzkörpergewindetrieb nach Anspruch 7,
**dadurch gekennzeichnet, dass** der Verlauf der das Umlenkelement (18) anschneidenden Laufbahnflanke des vorletzten Gewindeumlaufs (14a) derart gewählt wird, dass diese Laufbahnflanke bei der Vorüberbewegung der Wälzkörper gezielt entlastet wird.

9. Wälzkörpergewindetrieb nach einem der Ansprüche 1 bis 8,
**dadurch gekennzeichnet, dass** das Umlenkelement (18) eine Ausnehmung (36) aufweist, in welche ein Halteelement eingesetzt ist, das aus einem härteren oder weicheren Material gebildet ist als das Umlenkelement (18), wobei die sich in Richtung der Tiefe der Ausnehmung (36) erstreckende Abmessung des Halteelements derart bemessen ist, dass das in der Ausnehmung (36) aufgenommene Halteelement weiter aus der Ausnehmung (36) hervorsteht, als es dem zwischen dem Umlenkelement (18) und der diesem zugeordneten Aufnahmevertiefung (12b) der Gewindemutter (12) vorgesehenen Spiel entspricht.

10. Wälzkörpergewindetrieb nach Anspruch 9,
**dadurch gekennzeichnet, dass** das Halteelement aus der Ausnehmung (36) zwischen etwa 0,05 mm und etwa 0,4 mm, vorzugsweise etwa 0,2 mm, hervorsteht.

11. Wälzkörpergewindetrieb nach Anspruch 9 oder 10,
**dadurch gekennzeichnet, dass** das Halteelement eine Kugel ist.

12. Wälzkörpergewindetrieb nach einem der Ansprüche 9 bis 11,
**dadurch gekennzeichnet, dass** die Ausnehmung (36) in einer Teilfläche (26a) der Außenfläche des Umlenkelements (18) vorgesehen ist, welche zu jener Teilfläche der Außenfläche des Umlenkelements (18) im Wesentlichen entgegengesetzt angeordnet ist, in welche der zum Gewindekanal (16) führende Endabschnitt (20b) des Umlenkkanals (20) mündet

13. Wälzkörpergewindetrieb nach einem der Ansprüche 1 bis 12,
**dadurch gekennzeichnet, dass** das Umlenkelement (18) einen zum Eingriff in einen Gewindeumlauf der Gewindespindel bestimmten Wälzkörperabhebeansatz (40) aufweist.

14. Wälzkörpergewindetrieb nach Anspruch 13,
**dadurch gekennzeichnet, dass** die Außenkontur des Wälzkörperabhebeansatzes (40) im Wesentlichen der Kontur einer Bodenfläche des Gewindeumlaufs entsprechend ausgebildet ist, und zwar vorzugsweise derart, dass sie im betriebsfertig montierten Zustand des Wälzkörpergewindetriebs im Wesentlichen äquidistant zur Kontur der Bodenfläche des Gewindeumlaufs der Gewindespindel angeordnet ist.

15. Wälzkörpergewindetrieb nach der Ansprüche 1 bis 14,
**dadurch gekennzeichnet, dass** der Rückführkanal (22) vom Innenraum eines einstückig oder mehrstückig ausgebildeten Rückführrohres (42) gebildet ist, das in eine Rückführausnehmung (12c) der Gewindemutter (12) eingesetzt ist.

16. Wälzkörpergewindetrieb nach Anspruch 15,
**dadurch gekennzeichnet, dass** wenigstens eines der Längsenden des Rückführrohrs (42) in eine am Umlenkelement (18) ausgebildete Ringausnehmung (44) eingreift.

17. Wälzkörpergewindetrieb nach Anspruch 15 oder 16,
**dadurch gekennzeichnet, dass** das Rückführrohr (42) mit dem Umlenkelement (18) verklemmt ist.

18. Wälzkörpergewindetrieb nach einem der Ansprüche 1 bis 17,
**dadurch gekennzeichnet, dass** die Umlenkelement-Teile (26, 28) aus Kunststoff gefertigt, vorzugsweise spritzgegossen sind.

19. Wälzkörpergewindetrieb nach einem der Ansprüche 1 bis 18,
**dadurch gekennzeichnet, dass** die Wälzkörper Kugeln sind.

## Claims

1. Rolling-body screw drive (10) having a threaded spindle and a threaded nut (12) enclosing the threaded spindle,
it being the case that at least one helically running threaded channel (16) is provided between an outer circumferential surface of the threaded spindle and an inner circumferential surface (12a) of the threaded nut (12),
it being the case that the threaded channel (16) forms, together with a return channel (22) which connects the two end regions (16a, 16b) of the threaded channel (16), an endless circulatory channel (24) in which an endless series of rolling bodies is accommodated,
it being the case that each of the two end regions (16a, 16b) of the at least one threaded channel (16) is assigned a separate deflecting element (18), which is accommodated in an accommodating depression (12b) of the threaded nut (12), is retained on the threaded nut (12) and has a deflecting channel (20), for transferring the rolling bodies between the threaded channel (16) and the return channel (22) and between the return channel (22) and the threaded channel (16), and
it being the case that at least one of the deflecting elements (18) is made up of at least two deflecting-element parts (26, 28) which together bound the deflecting channel (20), **characterized in that** a boundary surface (30, 32) of each of the deflecting-element parts (26, 28), said boundary surface helping to bound the deflecting channel (20), extends from an inlet end (20a) of the deflecting channel (20) to an outlet end (20b) of the deflecting channel (20).

2. Rolling-body screw drive according to Claim 1, **characterized in that** the deflecting element (18) comprises a main deflecting-element part (26), which serves, for example, for the fastening of the deflecting element (18) on the threaded nut (12), and at least one secondary deflecting-element part (28).

3. Rolling-body screw drive according to Claim 1 or 2, **characterized in that** the deflecting element (18) is screwed to the threaded nut (12).

4. Rolling-body screw drive according to Claims 2 and 3, **characterized in that** a through-passage hole (34) provided for the through-passage of the screw-bolt merely passes through the main deflecting-element part (26).

5. Rolling-body screw drive according to one of Claims 2 to 4, **characterized in that**, as a result of the fastening of the main deflecting-element part (26) on the threaded nut (12), at least one secondary deflecting-element part (28) is retained on the threaded nut (12) by said main deflecting-element part (26).

6. Rolling-body screw drive according to one of Claims 1 to 5, **characterized in that** the deflecting-element parts (26, 28) are clamped on one another, for example as a result of the fastening of the deflecting element (18) on the threaded nut (12).

7. Rolling-body screw drive according to one of Claims 1 to 6, **characterized in that** the penultimate thread turn (14a) of the threaded surface (14) bounding the threaded channel (16) on the part of the threaded nut (12) is formed, at least in part (48), by the outer surface of the deflecting element (18).

8. Rolling-body screw drive according to Claim 7, **characterized in that** the course of that running-path flank of the penultimate thread turn (14a) which cuts into the deflecting element (18) is selected such that said running-path flank is specifically relieved of loading as the rolling bodies move past.

9. Rolling-body screw drive according to one of Claims 1 to 8, **characterized in that** the deflecting element (18) has a cutout (36) into which there is inserted a retaining element which is formed from a harder or softer material than the deflecting element (18), the retaining element being dimensioned in the direction of the depth of the cutout (36) such that the retaining element accommodated in the cutout (36) projects from the cutout (36) to a greater extent than corresponds to the play provided between the deflecting element (18) and the accommodating depression (12b) which is assigned to said deflecting element and belongs to the threaded nut (12).

10. Rolling-body screw drive according to Claim 9, **characterized in that** the retaining element projects from the cutout (36) by between approximately 0.05 mm and approximately 0.4 mm, preferably approximately 0.2 mm.

11. Rolling-body screw drive according to Claim 9 or 10, **characterized in that** the retaining element is a ball.

12. Rolling-body screw drive according to one of Claims 9 to 11, **characterized in that** the cutout (36) is provided in a sub-surface (26a) of the outer surface of the deflecting element (18), said sub-surface being arranged essentially opposite that sub-surface of the outer surface of the deflecting element (18) into which the end section (20b) of the defecting channel (20), said end section leading to the threaded channel (16), opens out.

13. Rolling-body screw drive according to one of Claims 1 to 12, **characterized in that** the deflecting element (18) has a rolling-body lifting extension (40) intended for engagement in a thread turn of the threaded spindle.

14. Rolling-body screw drive according to Claim 13, **characterized in that** the outer contour of the rolling-body lifting extension (40) is designed to correspond essentially to the contour of a base surface of the thread turn, to be precise preferably such that, in the state in which the rolling-body screw drive is assembled and ready for operation, said outer contour is arranged in an essentially equidistant manner to the contour of the base surface of the thread turn of the threaded spindle.

15. Rolling-body screw drive according to one of Claims 1 to 14, **characterized in that** the return channel (22) is formed by the interior of a return tube (42) which is designed in one or more parts and is inserted into a return cutout (12c) of the threaded nut (12).

16. Rolling-body screw drive according to Claim 15, **characterized in that** at least one of the longitudinal ends of the return tube (42) engages in an annular cutout (44) formed on the deflecting element (18).

17. Rolling-body screw drive according to Claim 15 or 16, **characterized in that** the return tube (42) is clamped to the deflecting element (18).

18. Rolling-body screw drive according to one of Claims 1 to 17, **characterized in that** the deflecting-element parts (26, 28) are produced, preferably injection moulded, from plastic.

19. Rolling-body screw drive according to one of Claims 1 to 18, **characterized in that** the rolling bodies are balls.

## Revendications

1. Entraînement fileté à éléments de roulement (10) avec un axe fileté et un écrou taraudé (12) entourant l'axe fileté,
dans lequel au moins un conduit fileté (16) s'étendant en forme de vis est prévu entre une surface périphérique extérieure de l'axe fileté et une surface périphérique intérieure (12a) de l'écrou taraudé (12),
dans lequel chaque conduit fileté (16) forme ensemble avec un conduit de retour (22) reliant les deux zones d'extrémité (16a, 16b) du conduit fileté (16) un conduit de circulation sans fin (24) dans lequel est reçue une suite sans fin d'éléments de roulement,
dans lequel un élément déflecteur (18) avec un conduit de déflection (20), logé dans un réceptacle creux (12b) de l'écrou taraudé (12) et maintenu sur l'écrou taraudé (12), est affecté à chacune des deux zones d'extrémité (16a, 16b) dudit au moins un conduit fileté (16) afin de transférer les éléments de roulement entre le conduit fileté (16) et le conduit de retour (22) ou entre le conduit de retour (22) et le conduit fileté (16), et
dans lequel l'un au moins des éléments déflecteurs (18) se compose d'au moins deux parties d'élément déflecteur (26, 28) qui limitent conjointement le conduit de déflection (20),
**caractérisé en ce qu'**une surface délimitante (30, 32) contribuant à limiter le conduit de déflection (20) de chacune des parties d'élément déflecteur (26, 28) s'étend d'une extrémité d'entrée (20a) du conduit de déflection (20) jusqu'à une extrémité de sortie (20b) du conduit de déflection (20).

2. Entraînement fileté à éléments de roulement selon la revendication 1, **caractérisé en ce que** l'élément déflecteur (18) comprend une partie principale d'élément déflecteur (26), servant par exemple à fixer l'élément déflecteur (18) sur l'écrou taraudé (12), ainsi qu'au moins une partie accessoire d'élément déflecteur (28).

3. Entraînement fileté à éléments de roulement selon la revendication 1 ou la revendication 2, **caractérisé en ce que** l'élément déflecteur (18) est vissé avec l'écrou taraudé (12).

4. Entraînement fileté à éléments de roulement selon les revendications 2 et 3, **caractérisé en ce qu'**un trou traversant (34) prévu pour le passage de la tige filetée traverse simplement la partie principale de l'élément déflecteur (26).

5. Entraînement fileté à éléments de roulement selon l'une des revendications 2 à 4, **caractérisé en ce qu'**au moins une partie accessoire d'élément déflecteur (28) est maintenue par la partie principale d'élément déflecteur (26) sur l'écrou taraudé (12) par suite de la fixation de ladite partie principale d'élément déflecteur (26) sur l'écrou taraudé (12).

6. Entraînement fileté à éléments de roulement selon l'une des revendications 1 à 5, **caractérisé en ce que** les parties d'élément déflecteur (26, 28) sont bloquées l'une contre l'autre, par exemple à la suite de la fixation de l'élément déflecteur (18) sur l'écrou taraudé (12).

7. Entraînement fileté à éléments de roulement selon l'une des revendications 1 à 6, **caractérisé en ce que** l'avant-dernière spire (14a) de la surface filetée (14) limitant le conduit fileté (16) du côté de l'écrou taraudé (12) est formée au moins en partie (48) par la surface extérieure de l'élément déflecteur (18).

8. Entraînement fileté à éléments de roulement selon la revendication 7, **caractérisé en ce que** le profil du flanc de chemin de roulement de l'avant-dernière spire (14a) entamant l'élément déflecteur (18) est choisi de telle façon que ce flanc de chemin de roulement est déchargé de manière ciblée lorsque les éléments de roulement le franchissent.

9. Entraînement fileté à éléments de roulement selon l'une des revendications 1 à 8, **caractérisé en ce que** l'élément déflecteur (18) présente un évidement (36) dans lequel est introduit un élément d'arrêt fait d'un matériau plus dur ou plus mou que l'élément déflecteur (18), dans lequel la dimension de l'élément d'arrêt qui s'étend dans le sens de la profondeur de l'évidement (36) est calculée de façon que l'élément d'arrêt logé dans l'évidement (36) dépasse de l'évidement (36) d'une distance supérieure au jeu prévu entre l'élément déflecteur (18) et le réceptacle creux (12b) de l'écrou taraudé (12) affecté à cet élément.

10. Entraînement fileté à éléments de roulement selon la revendication 9, **caractérisé en ce que** l'élément d'arrêt dépasse de l'évidement (36) d'une distance comprise entre environ 0,05 mm et environ 0,4 mm, de préférence d'environ 0,2 mm.

11. Entraînement fileté à éléments de roulement selon la revendication 9 ou la revendication 10, **caractérisé en ce que** l'élément d'arrêt est une bille.

12. Entraînement fileté à éléments de roulement selon l'une des revendications 9 à 11, **caractérisé en ce que** l'évidement (36) est prévu dans une partie de surface (26a) de la surface extérieure de l'élément déflecteur (18) qui est disposée sensiblement à l'opposé de ladite partie de surface de la surface extérieure de l'élément déflecteur (18) dans laquelle débouche la section terminale (20b) du conduit de déflection (20) menant au conduit fileté (16).

13. Entraînement fileté à éléments de roulement selon l'une des revendications 1 à 12, **caractérisé en ce que** l'élément déflecteur (18) présente un téton de soulèvement des éléments de roulement (40) destiné à venir en prise avec une spire de l'axe fileté.

14. Entraînement fileté à éléments de roulement selon la revendication 13, **caractérisé en ce que** le contour extérieur du téton de soulèvement des éléments de roulement (40) est formé sensiblement suivant le contour correspondant à une surface de fond de la spire et de préférence de telle façon que, dans l'état monté prêt à fonctionner de l'entraînement fileté à éléments de roulements, il soit disposé sensiblement à égale distance du contour de la surface de fond de la spire de l'axe fileté.

15. Entraînement fileté à éléments de roulement selon l'une des revendications 1 à 14, **caractérisé en ce que** le conduit de retour (22) est formé par l'espace interne d'un tube de retour (42) d'un seul tenant ou en plusieurs pièces qui est introduit dans un évidement de retour (12c) de l'écrou taraudé (12).

16. Entraînement fileté à éléments de roulement selon la revendication 15, **caractérisé en ce que** l'une au moins des extrémités longitudinales du tube de retour (42) s'engage dans un évidement annulaire (44) formé dans l'élément déflecteur (18).

17. Entraînement fileté à éléments de roulement selon la revendication 15 ou la revendication 16, **caractérisé en ce que** le tube de retour (42) est bloqué avec l'élément déflecteur (18).

18. Entraînement fileté à éléments de roulement selon l'une des revendications 1 à 17, **caractérisé en ce que** les parties d'élément déflecteur (26, 28) sont fabriquées en matière plastique, de préférence moulées par injection.

19. Entraînement fileté à éléments de roulement selon l'une des revendications 1 à 18, **caractérisé en ce que** les éléments de roulement sont des billes.
